# EUROPÄISCHE PATENTSCHRIFT

(11) **EP 1 685 332 B1**
(45) Veröffentlichungstag und Bekanntmachung des Hinweises auf die Patenterteilung: **02.05.2007**
(21) Anmeldenummer: 04818123.4
(22) Anmeldetag: 04.11.2004
(51) Int. Cl.: F16D 3/223

(54) **KUGELVERSCHIEBEGELENK MIT GESCHRÄGTEN KUGELLAUFBAHNEN**
CONSTANT VELOCITY JOINT WITH INCLINED BALL TRACKS
JOINT A BILLES A PISTES CROISEES, POURVU DE PISTES DE ROULEMENT OBLIQUES

(30) Priorität: 10.11.2003 DE 10352408
(43) Veröffentlichungstag der Anmeldung: 02.08.2006
(73) Patentinhaber: Volkswagen Aktiengesellschaft, 38436 Wolfsburg (DE)
(72) Erfinder: SCHAAF, Gregor, 38106 Braunschweig (DE); KNITTEL, Walter, 38446 Wolfsburg (DE)
(74) Vertreter: Beck, Michael Rudolf
(86) Internationale Anmeldenummer: PCT/EP2004/012501
(87) Internationale Veröffentlichungsnummer: WO 2005/045270

(56) Entgegenhaltungen:
- DE-A1- 4 215 218
- DE-B- 1 267 915
- GB-A- 1 192 468
- GB-A- 2 269 438
- US-A1- 2002 022 528
- PATENT ABSTRACTS OF JAPAN Bd. 2002, Nr. 05, 3. Mai 2002 (2002-05-03) & JP 2002 005186 A (NTN CORP), 9. Januar 2002 (2002-01-09)

## Beschreibung

Die Erfindung bezieht sich auf ein Kugelverschiebegelenk mit geschrägten Kugellaufbahnen, umfassend einen Käfig mit mehreren in Umfangsrichtung länglichen Fenstern, und mehrere, in den Fenstern aufgenommene Kugeln.

Derartige Kugelverschiebegelenke in VL-Bauart sind aus dem Stand der Technik allgemein bekannt. Sie lassen sich dazu verwenden, zwei Wellen zum Zweck der Übertragung einer Antriebsleistung miteinander zu koppeln. Aufgrund ihrer Winkelbeweglichkeit erlauben diese Gelenke einen Ausgleich von im Betrieb auftretenden Winkelveränderungen zwischen den miteinander gekoppelten Wellen. Überdies ist im Unterschied zu Festgelenken in einem begrenzten Ausmaß ein Ausgleich von Axialverschiebungen zwischen den Wellen möglich.

Kugelverschiebegelenke werden beispielsweise in Radantrieben von Kraftfahrzeugen als Gleichlaufgelenke in Verbindung mit einer Gelenkwelle eingesetzt. Auch ein Einsatz in Längswellen ist gebräuchlich.

Der Verschiebeweg eines VL-Gelenks wird unter anderem durch die Länge der Fenster in Umfangsrichtung des Käfigs bestimmt, da sich die Kugeln aufgrund der geschrägten Kugellaufbahnen unter Beugung des Gelenks bei jeder Umdrehung sowohl in Richtung der Gelenkachsrichtung als auch in Umfangsrichtung, d. h. tangential bewegen. Hierbei entstehen im Gelenk sowohl Verschiebe- als auch Beugekräfte. Diese kommen im wesentlichen durch die Pressung zwischen den Kugeln und den Kugellaufbahnen am Gelenkinnenteil und am Gelenkaußenteil sowie weiterhin durch die Pressung zwischen den Kugeln und dem Kugelkäfig zustande.

Je nach Sitz der Kugeln in den Käfigfenstern wird zwischen leichtverschieblichen Gelenken, bei denen die Kugeln Spiel aufweisen, und schwerverbauten Gelenken, bei denen die Kugeln in die Fenster eingepresst sind, unterschieden. Leichtverschiebliche Gelenke besitzen gegenüber schwerverbauten Gelenken Vorteile in bezug auf die Lebensdauer, das Temperaturverhalten sowie die akustischen Eigenschaften. Hohe Verschiebe- und Beugekräfte bedingen hingegen ein vergleichsweise steifes Gelenk. Dieses bildet in der Regel eine akustische Brücke, über die Schwingungen übertragen werden. Bei einem Einsatz in einem Radantrieb können beispielsweise Schwingungen von einem Motor oder einem Getriebe zu einem Fahrzeugrad und damit über das Fahrwerk zu der Karosserie gelangen. Diese mechanisch oder akustisch wahrnehmbaren Schwingungen werden von den Fahrzeuginsassen bisweilen als störend empfunden.

Leichtverschiebliche VL-Gelenke sind vor diesem Hintergrund günstiger, neigen jedoch eher zu Käfigrasseln und sind in bezug auf die Montage problematisch, da sie sich beim Handling selbst zerlegen können. Vor allem bei Gelenken, bei denen einzelne Elemente durch Verkippen untereinander oder von weiteren Elementen zusammengebaut werden müssen, und bei denen keine Kappen oder Deckel als Demontagesicherungen vorgesehen werden, besteht die Gefahr, dass sich bereits zusammengebaute Elemente wieder selbstständig machen oder das ganze Gelenk bei der Montage am Fahrzeug auseinanderfällt.

Ein Gelenk nach dem Oberbegriff von Patentanpruch 1 ist aus der GB 1 192 468 A bekannt.

Vor diesem Hintergrund zielt die Erfindung darauf ab, ein Kugelverschiebegelenk in VL-Bauart zu schaffen, das im Hauptlaufbereich lediglich geringe Verschiebe- und Beugekräfte aufweist und sich selbst einfach zusammenbauen sowie als Einheit einfach montieren lässt, ohne hierbei auseinanderzufallen.

Diese Aufgabe wird durch ein Kugelverschiebegelenk gemäß Patentanspruch 1 gelöst. Dieses zeichnet sich durch die besondere Konfiguration seiner Fenster in bezug auf die Kugeln aus. Erfindungsgemäß nehmen die Fenster die Kugeln in Fenstermitte mit Spiel auf. Bei einem Abbeugen oder Verschieben des Gelenks über den Hauptlaufbereich hinaus werden die Kugeln hingegen in Fensterrandbereichen klemmend gehalten.

Durch diese besondere Konfiguration der Fenster bleiben die zwischen den Kugeln und dem Käfig erzeugten Anteile der Verschiebekraft und Beugekraft gering. Auf die Pressung zwischen den Kugeln und dem Gelenkinnenteil sowie dem Gelenkaußenteil hat dies jedoch keinen Einfluss.

Die erhöhten Verschiebekräfte bei einem großen axialen Verschiebeweg sowie die hohen Beugekräfte bei großen Beugewinkeln verhindern beim Zusammenbau bzw. bei der Montage des Gelenks eine selbsttätige Demontage. Hierdurch wird das Handling beim Zusammenbau und nachfolgenden Verbau erleichtert.

In vorteilhafter Ausgestaltung weisen die Fenster in bezug auf die Kugeln in Fenstermitte eine Spielpassung, an den Randbereichen hingegen eine Presspassung auf.

Bei einem Betrieb des Gelenks im Hauptlaufbereich, bei dem sich die Kugeln in etwa in der Gelenkmitte befinden und lediglich geringe Verschiebewege und Beugewinkel auftreten, zentriert sich der Käfig durch die auf die Kugeln einwirkenden Kräfte nach dem Prinzip des kleinsten Widerstands. Die Kugeln befinden sich hierbei in der Fenstermitte. Aufgrund der Spielpassung ergeben sich somit im Dauerbetrieb geringe Verschiebe- und Beugekräfte.

Die Selbstzentrierung ermöglicht den Einsatz des Gelenks bei schwimmenden Wellen mit zwei VL-Gelenken in der Hinterachse, wobei innenliegende Anschläge zwischen dem Gelenkinnenteil und dem Käfig entfallen können und dadurch größere Verschiebewege realisiert werden können.

Die Presspassung an den Randbereichen vermeidet durch die Klemmwirkung im Käfigfenster die Gefahr einer versehentlichen Demontage durch Auseinanderfallen des Gelenks bei größeren Verschiebewegen oder Beugewinkein. Bei einer automatisierten Montage des Gelenks sowie einer zugehörigen Antriebswelle kann die bisher meist notwendige Demontageabsicherung entfallen.

Durch die vorstehend erläuterte Konfiguration der Käfigfenster wird überdies ein eventuelles tangentiales Rasseln des Käfigs gedämpft. Dabei hat es sich als günstig erwiesen, wenn die Spielpassung maximal +0,2 mm beträgt. Der bevorzugte Bereich für die Presspassung beträgt -0,01 bis -0,05 mm.

Zur Erzielung dieser Passungen entlang der Haupterstreckungsrichtung der Fenster sind unterschiedliche Ausgestaltungen der Kugellaufflächen an den Fenstern möglich. Diese Kugellaufflächen weisen aufgrund der Erstreckung der Fenster in Umfangsrichtung jeweils in Axialrichtung des Gelenks.

Aus dem Stand der Technik sind unterschiedliche Formen von Käfigfenstern in nahezu unüberschaubarer Vielfalt bekannt. Die Formgebung der Fenster orientiert sich dabei unter anderem an dem Gesichtspunkt einer Vergrößerung der Kontaktfläche zwischen den Kugeln und der Laufflächen an den Fenstern. Beispiele hierfür zeigen die GB 1,192,468 und die GB 2,269,438 A.

Ein weiteres Ziel besteht oftmals darin, den infolge der Bewegung des Gelenks radial wandernden Kontaktpunkt möglichst vom Käfigrand fernzuhalten, um dessen Festigkeitseigenschaften nicht beeinträchtigen. Ein entsprechendes Konzept, das auf sich radial nach außen verjüngende Fenster setzt, wird beispielsweise in der DE 43 17 364 A1 offenbart. Hierdurch kann der Käfig radial etwas weiter nach außen verlegt werden, ohne dass es zu Beschädigungen am innenrand des Käfigs kommt. Aus der DE 1 267 915 A ist ebenfalls bekannt, über die Formgebung der Fenster einen Käfig im Hinblick auf dessen Festigkeit zu optimieren.

Die DE 42 15 218 C2 lehrt die Möglichkeit, über die Formgebung der Fenster Geräuschemissionen zu vermindern. Hierzu werden an den Randbereichen der Käfigfenster Verengungen vorgesehen, die in Umfangsrichtung zwischen dem Käfig und den Kugeln Anschläge darstellen. Aufgrund der dort gewählten Formgebung sind diese Anschläge jedoch nicht geeignet, die Kugeln festzuhalten, so dass die Verengungen nicht die Funktion einer Demontagesicherung bei großen Beugewinkeln oder axialen Verschiebewegen besitzen. Vielmehr weisen diese eine Betriebsfunktion zur Verminderung der Geräuschbildung auf. Im übrigen geht die DE 42 15 218 C2 von einer formschlüssigen, vermutlich verpressten Aufnahme der Kugeln in den Fenstern aus.

In sämtlichen Fällen fehlt im Stand der Technik die erfindungsgemäße Nutzung unterschiedlicher Passungen entlang der Kugellaufflächen an den Käfigfenstern mit dem Ziel, einerseits ein leichtverschiebliches VL-Gelenk zu schaffen und andererseits dessen Montage zu erleichtern und eine Selbstdemontage zu verhindern.

Gemäß einer vorteilhaften Ausgestaltung der Erfindung erfolgt der Übergang von der Spielpassung zur Presspassung von der Fenstermitte zu den Randbereichen kontinuierlich.

So kann beispielsweise mindestens eine der Kugellaufflächen an den Fenstern von einem Randbereich zum in Umfangsrichtung gegenüberliegenden Randbereich kreisförmig ausgebildet sein. Dabei wird über einen verhältnismäßig großen Krümmungsradius, beispielsweise in der Größenordnung von 150 bis 300 Millimetern der Übergang von einer Presspassung zu einer Spielpassung und wiederum zu einer Presspassung realisiert. Diese Ausgestaltung besitzt den Vorteil einer verhältnismäßig einfachen Fertigung mit herkömmlichen Fertigungsmethoden.

Anstelle einer Krümmung kann mindestens eine der Kugellaufflächen an den Fenstern von einem Randbereich zum in Umfangsrichtung gegenüberliegenden Randbereich auch durch zwei angewinkelte Schrägen gebildet werden, die in Fenstermitte zusammenlaufen.

Der Anstellwinkel der Schrägen ist in dabei angesichts der Passungen verhältnismäßig klein. Er beträgt vorzugsweise etwa 0 bis 2 Grad.

Im Übergang der Schrägen kann zudem eine werkzeugabhängige Übergangsrundung vorgesehen sein, um die Kerbwirkung am Käfig zu vermindern.

Alternativ hierzu ist es auch möglich, im Übergang der Schrägen einen geraden Abschnitt vorzusehen, der über Rundungen an die Schrägen anschließt. Unter einem geraden Abschnitt wird hier jeder Abschnitt verstanden, der parallel zur Längsmittelachse eines Fensters verläuft.

Anstelle eines kontinuierlichen Übergangs von der Spielpassung zur Presspassung ist auch und eine gestufte Ausgestaltung der Kugellaufflächen an den Käfigfenstern möglich. So kann beispielsweise mindestens eine der Kugellaufflächen an den Fenstern von einem Randbereich zum in Umfangsrichtung gegenüberliegenden Randbereich durch zwei gerade Abschnitte mit Presspassung und einen mittleren Abschnitt mit Spielpassung gebildet werden.

Vorzugsweise sind die einander gegenüberliegenden Kugellaufflächen der Fenster in bezug auf die Längsmittelachse derselben symmetrisch. Es ist jedoch auch möglich, die vorstehend erläuterten Ausgestaltungsformen so miteinander zu kombinieren, dass sich unterschiedliche Typen an den Kugellaufflächen gegenüberliegen.

In jedem Fall wird jedoch gewährleistet, dass die Kugeln in der Fenstermitte einen Spielverbrauch aufweisen und bei einer seitlichen Bewegung entlang der Fensterlaufflächen immer mehr in den Bereich der Presspassung rutschen, was eine Steigerung der Verschiebe- und Beugekraft zufolge hat.

Alternativ oder ergänzend ist auch eine Konturierung der Kugellaufflächen an den Fenstern in Radialrichtung möglich.

Gemäß einer vorteilhaften Ausgestaltung der Erfindung sind die Kugellaufflächen der Fenster in Radialrichtung gekrümmt, wobei der Krümmungsradius größer als der Kugelradius ist. Die Krümmung ist dabei so vorgenommen, dass unter Berücksichtigung der betriebsbedingten radialen und axialen Bewegungen der Kugeln in den Fenstern die Kugeln im Mittelbereich der Fenster mit einer Spielpassung, in den Randbereichen bei einer starken Gelenkbeugung hingegen mit einer Presspassung aufgenommen sind.

Die Krümmung der Kugellaufflächen in Radialrichtung kann dabei eine kreisförmige Krümmung sein.

Alternativ hierzu können die Kugellaufflächen der Fenster in Radialrichtung auch abgeschrägt sein, und zwar so, dass sich die Fenster radial nach außen verjüngen. Die Schrägung ist dabei so angeordnet, dass wiederum unter Berücksichtigung der betriebsbedingten radialen und axialen Bewegungen der Kugeln in den Fenstern die Kugeln im Mittelbereich der Fenster mit einer Spielpassung, in den Randbereichen bei starker Gelenkbeugung hingegen mit einer Presspassung aufgenommen sind.

Dabei darf der Schrägungswinkel der Kugellaufflächen in Radialrichtung nicht zu groß sein, um im Hauptlaufbereich der Kugeln in Fenstermitte eine Spielpassung zu gewährleisten. Vorzugsweise liegt der Schrägungswinkel der Kugellaufflächen in Radialrichtung daher im Bereich von 0 bis einschließlich 7 Grad, bevorzugt im Bereich von 0,5 bis 4 Grad und weiter bevorzugt im Bereich von 1 bis 2 Grad.

Nachfolgend wird die Erfindung anhand von in der Zeichnung dargestellten Ausführungsbeispielen näher erläutert. Die Zeichnung zeigt in:
- Figur 1: eine räumliche Darstellung eines VL-Gelenks nach der Erfindung,
- Figur 2: eine räumliche Darstellung des VL-Gelenks aus Figur 1, wobei das Gelenkaußenteil weggelassen ist,
- Figur 3: eine schematische Darstellung der Kugellaufflächen des Käfigs in einer ersten Ausführungsform,
- Figur 4: eine schematische Darstellung der Kugellaufflächen des Käfigs in einer zweiten Ausführungsform,
- Figur 5: eine schematische Darstellung der Kugellaufflächen des Käfigs in einer dritten Ausführungsform,
- Figur 6: eine schematische Darstellung der Kugellaufflächen des Käfigs in einer vierten Ausführungsform,
- Figur 7: eine schematische Darstellung der Kugellaufflächen des Käfigs in einer fünften Ausführungsform,
- Figur 8: ein Diagramm zur Veranschaulichung des Verlaufs des Kontaktpunkts zwischen einer Kugellauffläche an einem Käfigfenster und einer Kugel bei unterschiedlichen Beugewinkeln für eine Gelenkumdrehung, wobei hier die Koordinaten in Radialrichtung und Tangentialrichtung des Käfigs aufgetragen sind,
- Figur 9: eine Schnittansicht durch einen Käfig nach einer sechsten Ausführungsform im Bereich eines Käfigfensters, wobei die Kugel lediglich angedeutet ist, und in
- Figur 10: eine Schnittansicht entsprechend Figur 9 einer siebten Ausführungsform.

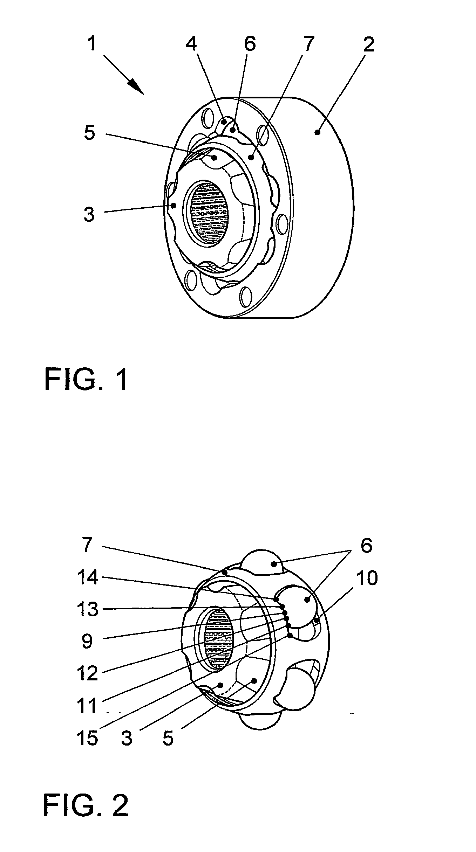

Die Figuren 1 und 2 zeigen beispielhaft ein Kugelverschiebegelenk 1 in VL-Bauart. Dieses umfasst ein Gelenkaußenteil 2 und ein in diesem angeordnetes Gelenkinnenteil 3. Sowohl das Gelenkaußenteil 2 als auch das Gelenkinnenteil 3 sind an ihren zueinander weisenden Umfangsflächen mit Kugellaufbahnen 4 bzw. 5 versehen. Diese Kugellaufbahnen 4 und 5 sind gegenüber den jeweiligen Bauteilmittelachsen A bzw. B angewinkelt. Wie insbesondere Figur 2 entnommen werden kann, weisen benachbarte Kugellaufbahnen 5 am Gelenkinnenteil 3 ihrem Betrag nach gleichartige Schrägungswinkel in bezug auf die Bauteilmittelachse B auf, unterscheiden sich jedoch hinsichtlich des Vorzeichens. Die Kugellaufbahnen 4 Gelenkaußenteil 2 sind ebenfalls zur zugehörigen Bauteilmittelachse A angewinkelt und jeweils abwechselnd geneigt. Kugellaufbahnpaare, die jeweils eine Kugel 6 aufnehmen, weisen gekreuzte Kugellaufbahnen 4 und 5 auf.

Zwischen dem Gelenkaußenteil 2 und dem Gelenkinnenteil 3 ist ein Käfig 7 angeordnet, der eine Vielzahl von Fenstern 8 zur Aufnahme der Kugeln 6 besitzt. Bei dem hier dargestellten Ausführungsbeispiel weist das Gelenk 1 insgesamt sechs Kugellaufbahnpaare mit sechs Kugeln 6 auf. Jedoch können auch weniger oder mehr Kugellaufbahnpaare mit einer entsprechenden Anzahl von Kugeln vorgesehen werden. Die Aufgabe des Käfigs 7 ist es, die Kugeln 6 im wesentlichen in einer gemeinsamen Ebene zu halten. Deren Steuerung erfolgt über die Kugellaufbahnen 4 und 5. Der Käfig selbst ist hingegen weder an dem Gelenkaußenteil 2 noch an dem Gelenkinnenteil 3 geführt. Vielmehr ermöglicht dieser eine axiale Verschiebung zwischen dem Gelenkaußenteil 2 und dem Gelenkinnenteil 3.

Um bei einer Rotation des Gelenks 1 unter Beugung Zwängungen zu vermeiden, sind aufgrund der geschrägten Kugellaufbahnen 4 und 5 die Fenster 8 des Käfigs 7 in Umfangsrichtung länglich ausgebildet. Die einander in Axialrichtung des Gelenks 1 gegenüberliegenden Seitenwände der Käfigfenster 8 bilden Kugellaufflächen 9 und 10 aus, die sich jeweils von einem ersten Randbereich 11 über einen Mittelbereich 12 zu einem zweiten Randbereich 13 erstrecken. Bei dem hier dargestellten Ausführungsbeispiel sind die Fenster 8 an ihren in Umfangsrichtung liegenden Enden 14 und 15 zusätzlich jeweils mit einer Verbreiterung versehen, die jedoch nicht zwingend notwendig ist.

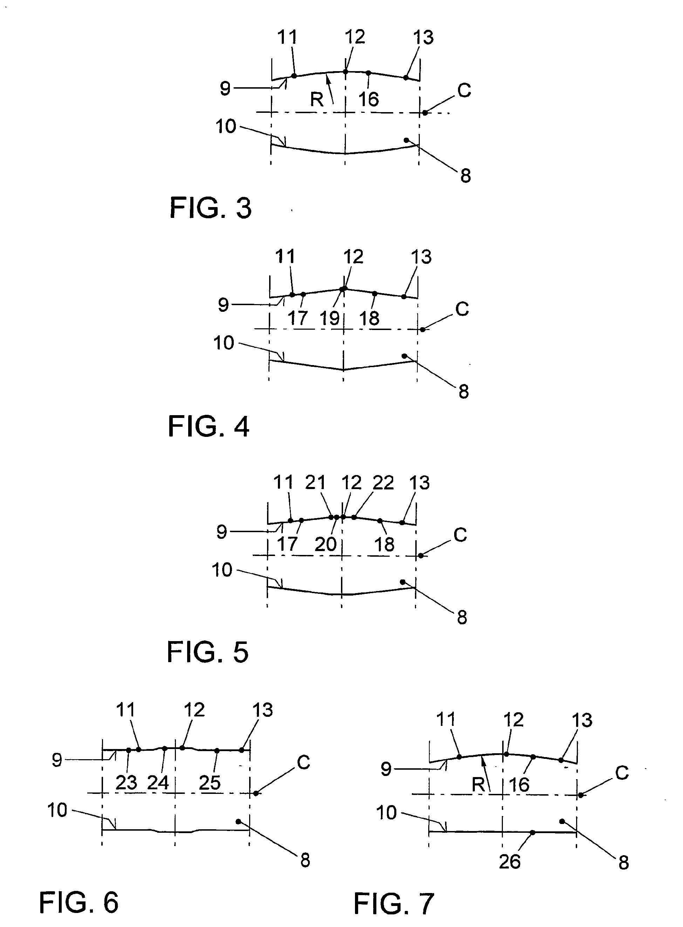

Die Kugellaufflächen 9 und 10 der Fenster 18 können, wie im folgenden anhand der Figuren 3 bis 10 erläutert werden wird, in unterschiedlicher Art und Weise ausgeführt werden. In sämtlichen Fällen wird jedoch gewährleistet, dass die Fenster 8 die Kugeln 6 in Fenstermitte 12 mit Spiel aufnehmen, bei einem Abbeugen des Gelenks 1 über den Hauptlaufbereich hinaus jedoch in den Randbereichen 11 und 13 klemmend halten.

Dabei weisen die Fenster 8 in bezug auf die Kugeln 6 in Fenstermitte 12 eine Spielpassung, an den Randbereichen 11 und 13 hingegen jeweils eine Presspassung auf.

Bei den hier dargestellten Ausführungsformen beträgt die Spielpassung maximal +0,2 mm, die Presspassung hingegen -0,01 bis -0,05 mm. Für erheblich größere oder kleinere Gelenke können sich andere Werte ergeben. Wesentlich ist jedoch das Vorhandensein einer Spielpassung im Mittelbereich 12 sowie das Vorhandensein einer Presspassung in den Randbereichen 11 und 13.

Der Mittelbereich 12 erstreckt sich über den Hauptlaufbereich der Kugeln 6 im Dauerbetrieb des VL-Gelenks 1, in dem lediglich kleine Beugewinkel auftreten. Durch die Spielpassung werden die positiven Eigenschaften eines leichtverschieblichen Gelenks hinsichtlich Lebensdauer, Temperaturverhalten und akustischer Eigenschaften aufrechterhalten. Der Käfig 7 zentriert sich durch die auf die Kugeln 6 wirkenden Kräften derart, dass sich die Kugeln 6 in der Fenstermitte 12 befinden. Die Verschiebe- und Beugekräfte bleiben somit im Dauerbetrieb gering.

Erst bei großen axialen Verschiebewegen und/oder Beugewinkeln gelangen die Kugeln 6 in den Bereich der Presspassung, wobei die Verschiebe- und Beugekräfte merklich ansteigen. Praktisch wird man die entsprechenden Randbereiche 11 und 13 so anordnen, dass die größte Pressung im Betrieb selbst unter Extrembedingungen nicht erreicht wird. Zweck der Presspassung ist denn auch nicht eine Versteifung des Gelenks zu großen Beugewinkeln oder Verschiebewegen hin, sondern vielmehr eine Erleichterung bei der Montage.

Insbesondere leichtverschiebliche VL-Gelenke können nämlich beim Zusammenbau ihrer selbst aufgrund der geringen Verschiebe- und Beugekräfte aus der Mittellage sehr leicht auseinanderfallen. Dies gilt entsprechend auch für den Verbau solcher VL-Gelenke
1. Daher werden beim Zusammenbau sowie beim späteren Verbau der Gelenke eigene Demontagesicherungen benötigt. Solche können jedoch bei den erfindungsgemäßen Gelenken entfallen, da die Presspassung an den Randbereichen 11 und 13 ein unerwünschtes Auseinanderfallen verhindert.

Bei der ersten Ausgestaltungsform in Figur 3, die ein Fenster 8 eines Käfigs 7 in schematischer Darstellung zeigt - die Enden 14 und 15 sind hier weggelassen -, wird dies durch eine Krümmung 16 der Kugellaufflächen 9 und 10 vom ersten Randbereich 11 über den Mittelbereich 12 zum in Umfangsrichtung gegenüberliegenden zweiten Randbereich 13 erzielt. Der Krümmungsradius ist dabei so groß gewählt, dass sich die obengenannten Passungen ohne weiteres realisieren lassen. Bei VL-Gelenken, wie sie in Kraftfahrzeugen eingebaut werden, liegt der Krümmungsradius im Bereich von 150 bis 300 mm. Der Übergang von der Spielpassung zur Presspassung von der Fenstermitte 12 zu den Randbereichen 11 und 13 erfolgt kontinuierlich.

Die zweite Ausgestaltungsform in Figur 4 verwendet anstelle einer durchgehenden Krümmung 16 zwei angewinkelte Schrägen 17 und 18, die in Fenstermitte zusammenlaufen. Im Übergang der Schrägen 17 und 18 ist eine Übergangsrundung 19 vorgesehen, welche die beiden Schrägen 17 und 18 weich verbindet. Zur Einhaltung des obengenannten Passungsverlaufs entlang der Längsmittelachse C haben sich Anstellwinkel der Schrägen 17 und 18 zur Längsmittelachse C von 0 bis 2 Grad als zweckmäßig erwiesen. Bei zu steilen Anstellwinkeln kann eine ausreichende Klemmwirkung zur Demontagesicherung nicht mehr gewährleistet werden.

Die dritte Ausgestaltungsform nach Figur 5 stellt eine Abwandlung der zweiten Ausgestaltungsform dar. Anstelle der mittigen Übergangsrundung 19 ist ein gerader Abschnitt 20 vorgesehen, der parallel zur Längsmittelachse C verläuft. An diesen geraden Abschnitt 20 schließen dann wiederum die Schrägen 17 und 18 über Rundungen 21 bzw. 22 an.

Eine weitere, vierte Ausgestaltungsform ist in Figur 6 dargestellt. Bei dieser werden die Kugellaufflächen 9 und 10 am Fenster 8 im ersten und zweiten Randbereich 11 und 13 durch zwei gerade, längsmittelachsenparallele Abschnitte 23 und 25 mit Presspassung und einen mittleren geraden, längsmittelachsenparallelen Abschnitt 24 im Mittelbereich 12 gebildet. Es ergibt sich so eine Stufung der unterschiedlichen Passungsbereiche. Der Übergangsbereich kann hierbei durch Schrägen und/oder Rundungen weich gestaltet werden.

Die vorstehend erläuterten Fensterformen zeigen alle Kugellaufflächen 9 und 10, die zu der Längsmittelachse C symmetrisch sind. Es ist jedoch auch möglich, an einem Fenster 8 an den einander gegenüberliegenden Kugellaufflächen 9 und 10 unterschiedliche Ausgestaltungsformen vorzusehen. In Figur 7 ist beispielhaft eine Variante dargestellt, bei der eine Kugellauffläche 10 als durchgehend gerader Abschnitt 26 ausgebildet ist. Die gegenüberliegende Kugellauffläche 9 ist hier beispielhaft eine Krümmung 16 entsprechend Figur 3. Anstelle derselben kann jedoch auch eine Kugellauffläche 9 nach Figur 4, 5 oder 6 vorgesehen werden. Ein Vorteil der in Figur 7 dargestellten Ausgestaltungsform liegt in der geringeren Toleranzempfindlichkeit.

Sämtliche Fensterformen nach den Figuren 3 bis 7 sowie 9 und 10 können mittels herkömmlicher Fertigungstechniken und Werkzeuge hergestellt werden. Dabei können die gegebenenfalls vorhandenen Übergangradien bereits im Werkzeug eingearbeitet sein.

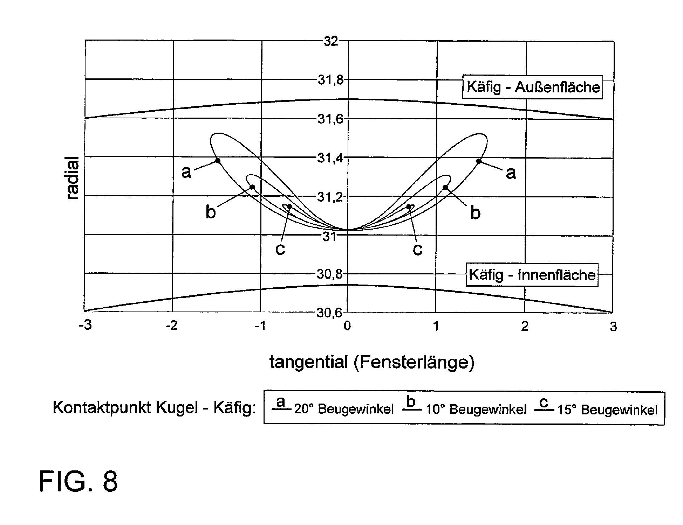

Beim Abbeugen und Verschieben bewegen sich die Kugeln 6 im Verhältnis zu den Laufflächen 9 und 10 in den Käfigfenstern 8 nicht nur tangential, d. h. in Umfangsrichtung, sondern auch radial. Figur 8 zeigt den Verlauf des Kontaktpunkts zwischen einer Kugel 6 und einem Käfig 8 bei verschiedenen Beugewinkeln während einer Rotation des VL-Gelenks 1. Dabei ergeben sich verhältnismäßig komplexe Bewegungen, die alle ein "Ansteigen" der Kugel 6 im Käfigfenster 8 zu den Randbereichen 11 und 13 hin zufolge haben.

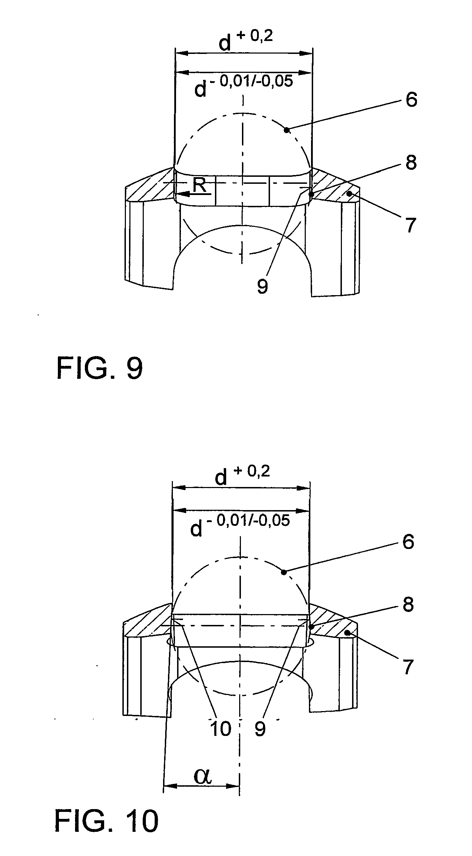

Die in den Figuren 9 und 10 dargestellten Ausgestaltungsformen nutzen die radiale Bewegung um eine mit zunehmendem Verschiebeweg und größerer Beugung steigende Pressung im Fenster 8 zu erzeugen. Im Mittelbereich 12 bleiben wiederum die Eigenschaften eines leichtverschieblichen VL-Gelenks 1 erhalten. Zur Veranschaulichung sind in den Figuren 9 und 10 die Passungen jeweils in Abhängigkeit des Kugeldurchmessers d eingezeichnet.

Die in Figur 9 dargestellte sechste Ausgestaltungsform weist in Radialrichtung gekrümmte Kugellaufflächen 9 und 10 auf. Deren Krümmungsradius R ist dabei deutlich größer als der Kugelradius d. Die Anordnung des großen Krümmungsradius R ist so gewählt, dass unter Berücksichtigung der betriebsbedingten radialen und axialen Bewegung der Kugeln 6 in den Fenstern 8, wie in Figur 8 gezeigt, die Kugeln 6 im Mittelbereich 12 der Fenster 8 mit einer Spielpassung, in den Randbereichen 11 und 13 bei starker Gelenkbeugung hingegen mit einer Presspassung aufgenommen sind. Bei kleinen Beugewinkeln steigt der Kontaktpunkt lediglich wenig an, wie Verlauf c in Figur 8 zeigt. Das Gelenk 1 arbeitet hierbei im Bereich der Spielpassung. Bei starken Beugewinkeln, wie sie im Betrieb nicht auftreten sollen, jedoch bei der Montage und beim Handling der Antriebsgelenkwelle vorkommen können, ergibt sich in Figur 8 der Verlauf a. Die Passung ist so gewählt, dass bei den unter Montage auftretenden Kräften eine ausreichende Haltekraft im Gelenk vorherrscht, die ein selbsttätiges Auseinanderfallen verhindert.

Figur 10 zeigt eine Abwandlung von Figur 9, bei der die Kugellaufflächen 9 und 10 der Fenster 8 in Radialrichtung abgeschrägt sind, wobei sich die Fenster 8 radial nach außen verjüngen. Die Abschrägung ist wiederum so dimensioniert, dass unter Berücksichtigung der betriebsbedingten radialen und axialen Bewegung der Kugeln 6 in den Fenstern 8 die Kugeln 6 im Mittelbereich 12 der Fenster 8 mit einer Spielpassung, in den Randbereichen 11 und 13 bei starker Gelenkbeugung jedoch mit einer Presspassung aufgenommen sind. Der Schrägungswinkel α der Kugellaufflächen 9 und 10 zur Radialrichtung beträgt etwa 1 bis 2 Grad.

Beide Varianten besitzen den Vorteil einer geringen Restunwucht durch den Käfig 7, da die Gelenke 1 in Radialrichtung selbstzentrierend sind. Ein weiterer Vorteil ist die Dämpfung von radialem Käfigrasseln.

Bei den in den Figuren 3 bis 7 dargestellten Varianten erfolgt diese Dämpfung eher in Tangentialrichtung. Hinsichtlich der Varianten mit gekrümmten Kugellaufflächen ergibt sich gegenüber solchen mit flachen Kugellaufflächen aufgrund der besseren Anschmiegung an die Kugeln tendenziell eine Vergrößerung der Kontaktfläche und damit eine geringere maximale Beanspruchung des Käfigs 7.

In sämtlichen Fällen ergibt sich ein Kugelverschiebegelenk in VL-Bauart, das im Hauptlaufbereich lediglich geringe Verschiebe- und Beugekräfte aufweist und sich selbst einfach zusammenbauen sowie als Einheit einfach montieren lässt, ohne hierbei auseinanderzufallen.

Die Erfindung wurde vorstehend anhand von bevorzugten Ausgestaltungsformen beispielhaft erläutert. Sie ist jedoch nicht auf diese beschränkt, sondern umfasst alle durch die Patentansprüche definierten Ausgestaltungsformen.

### BEZUGSZEICHENLISTE

- 1: Kugelverschiebegelenk
- 2: Gelenkaußenteil
- 3: Gelenkinnenteil
- 4: Kugellaufbahn
- 5: Kugellaufbahn
- 6: Kugel
- 7: Käfig
- 8: Fenster im Käfig 7
- 9: Kugellauffläche am Käfigfenster 8
- 10: Kugellauffläche am Käfigfenster 8
- 11: Randabschnitt
- 12: Mittelabschnitt
- 13: Randabschnitt
- 14: Ende eines Käfigfensters 8 in Umfangsrichtung
- 15: Ende eines Käfigfensters 8 in Umfangsrichtung
- 16: Krümmung
- 17: Schräge
- 18: Schräge
- 19: Übergangsrundung
- 20: gerader Abschnitt
- 21: Rundung
- 22: Rundung
- 23: gerader Abschnitt
- 24: mittlerer gerader Abschnitt
- 25: gerader Abschnitt
- 26: gerader Abschnitt
- A: Bauteilmittelachse des Gelenkaußenteils 2
- B: Bauteilmittelachse des Gelenkinnenteils 3
- C: Längsmittelachse des Fensters 8
- R: Radius
- d: Kugeldurchmesser
- α: Schrägungswinkel

## Patentansprüche

1. Kugelverschiebegelenk mit geschrägten Kugellaufbahnen (4, 5), umfassend einen Käfig (7) mit mehreren in Umfangsrichtung länglichen Fenstern (8), und mehrere, in den Fenstern (8) aufgenommene Kugeln (6), wobei die Fenster (8) die Kugeln (6) in Fenstermitte (12) mit Spiel aufnehmen, **dadurch gekennzeichnet, dass** bei einem Abbeugen oder Verschieben des Gelenks (1) über den Hauptlaufbereich hinaus die Fenster (8) die Kugeln (6) hingegen in Fensterrandbereichen (11,13) klemmend halten.

2. Kugelverschiebegelenk nach Anspruch 1, **dadurch gekennzeichnet, dass** die Fenster (8) in bezug auf die Kugeln (6) in Fenstermitte (12) eine Spielpassung, an den Randbereichen (11, 13) hingegen eine Presspassung aufweisen.

3. Kugelverschiebegelenk nach Anspruch 2, **dadurch gekennzeichnet, dass** die Spielpassung maximal +0,2 mm beträgt.

4. Kugelverschiebegelenk nach Anspruch 2 oder 3, **dadurch gekennzeichnet, dass** die Presspassung -0,01 bis -0,05 mm beträgt.

5. Kugelverschiebegelenk nach einem der Ansprüche 2 bis 4, **dadurch gekennzeichnet, dass** der Übergang von der Spielpassung zur Presspassung von der Fenstermitte (12) zu den Randbereichen (11, 13) kontinuierlich erfolgt.

6. Kugelverschiebegelenk nach einem der Ansprüche 1 bis 5, **dadurch gekennzeichnet, dass** mindestens eine der Kugellaufflächen (9, 10) an den Fenstern (8) von einem Randbereich (11) zum in Umfangsrichtung gegenüberliegenden Randbereich (13) kreisförmig, vorzugsweise mit einem Radius von 75 bis 300 Millimetern, weiter bevorzugt von 150 bis 300 Millimetern, ausgebildet ist.

7. Kugelverschiebegelenk nach einem der Ansprüche 1 bis 6, **dadurch gekennzeichnet, dass** mindestens eine der Kugellaufflächen (9, 10) an den Fenstern (8) von einem Randbereich (11) zum in Umfangsrichtung gegenüberliegenden Randbereich (12) durch zwei angewinkelte Schrägen (17, 18) gebildet wird, die in Fenstermitte (12) zusammenlaufen.

8. Kugelverschiebegelenk nach Anspruch 7, **dadurch gekennzeichnet, dass** der Anstellwinkel der Schrägen (17, 18) 0 bis 2 Grad beträgt.

9. Kugelverschiebegelenk nach Anspruch 7 oder 8, **dadurch gekennzeichnet, dass** im Übergang der Schrägen (17, 18) eine Übergangsrundung (19) vorgesehen ist.

10. Kugelverschiebegelenk nach einem der Ansprüche 7 oder 8, **dadurch gekennzeichnet, dass** im Übergang der Schrägen (17, 18) ein gerader Abschnitt (20) vorgesehen ist, der über Rundungen (21, 22) an die Schrägen anschließt.

11. Kugelverschiebegelenk nach einem der Ansprüche 1 bis 10, **dadurch gekennzeichnet, dass** mindestens eine der Kugellaufflächen (9, 10) an den Fenstern (8) von einem Randbereich (11) zum in Umfangsrichtung gegenüberliegenden Randbereich (13) durch zwei gerade Abschnitte (23, 25) mit Presspassung und einen mittleren Abschnitt (24) mit Spielpassung gebildet wird.

12. Kugelverschiebegelenk nach einem der Ansprüche 1 bis 11, **dadurch gekennzeichnet, dass** die einander gegenüberliegenden Kugellaufflächen (9, 10) an den Fenstern (8) bzgl. der Längsmittelachse (C) derselben symmetrisch sind.

13. Kugelverschiebegelenk nach einem der Ansprüche 1 bis 12, **dadurch gekennzeichnet, dass** die Kugellaufflächen (9, 10) der Fenster (8) in Radialrichtung gekrümmt sind, wobei der Krümmungsradius größer als der Kugelradius ist, derart, dass unter Berücksichtigung der betriebsbedingten radialen und axialen Bewegung der Kugeln (6) in den Fenstern (8) die Kugeln (6) im Mittelbereich (12) der Fenster (8) mit einer Spielpassung, in den Randbereichen (11, 13) bei starker Gelenkbeugung oder Verschiebung hingegen mit einer Presspassung aufgenommen sind.

14. Kugelverschiebegelenk nach Anspruch 13, **dadurch gekennzeichnet, dass** die Krümmung der Kugellaufflächen (9, 10) in Radialrichtung eine kreisförmige Krümmung ist.

15. Kugelverschiebegelenk nach einem der Ansprüche 1 bis 12, **dadurch gekennzeichnet, dass** die Kugellaufflächen (9, 10) der Fenster (8) in Radialrichtung abgeschrägt sind, wobei sich die Fenster (8) radial nach außen verjüngen, derart, dass unter Berücksichtigung der betriebsbedingten radialen und axialen Bewegung der Kugeln (6) in den Fenstern (8) (6) die Kugeln im Mittelbereich (12) der Fenster (8) mit einer Spielpassung, in den Randbereichen (11, 13) bei starker Gelenkbeugung oder Verschiebung hingegen mit einer Presspassung aufgenommen sind.

16. Kugelverschiebegelenk nach Anspruch 15, **dadurch gekennzeichnet, dass** der Schrägungswinkel der Kugellaufflächen (9, 10) in Radialrichtung im Bereich von 0 bis einschließlich 7 Grad, bevorzugt von 0,5 bis 4 Grad und weiter bevorzugt von 1 bis 2 Grad liegt.

## Claims

1. Constant velocity joint having bevelled ball tracks (4, 5), comprising a cage (7), with a plurality of windows (8) which are elongate in the peripheral direction, and a plurality of balls (6) which are held in the windows (8), with the windows (8) holding the balls (6) in the window centre (12) with play, **characterized in that**, in contrast thereto, in the event of a deflection or displacement of the joint (1) beyond the main running region, the windows (8) clampingly hold the balls (6) in window edge regions (11, 13).

2. Constant velocity joint according to Claim 1, **characterized in that** the windows (8) have, in relation to the balls (6), a clearance fit in the window centre (12), but a press fit at the edge regions (11, 13).

3. Constant velocity joint according to Claim 2,
**characterized in that** the clearance fit is a maximum of +0.2 mm.

4. Constant velocity joint according to Claim 2 or 3, **characterized in that** the press fit is -0.01 to -0.05 mm.

5. Constant velocity joint according to one of Claims 2 to 4, **characterized in that** the transition from the clearance fit to the press fit is continuous from the window centre (12) to the edge regions (11, 13).

6. Constant velocity joint according to one of Claims 1 to 5, **characterized in that** at least one of the ball running faces (9, 10) on the windows (8) is formed, from an edge region (11) to the opposite edge region (13) in the peripheral direction, so as to be circular, preferably with a radius of 75 to 300 millimetres, more preferably 150 to 300 millimetres.

7. Constant velocity joint according to one of Claims 1 to 6, **characterized in that** at least one of the ball running faces (9, 10) on the windows (8) is formed, from an edge region (11) to the opposite edge region (12) in the peripheral direction, by two angled bevels (17, 18) which converge in the window centre (12).

8. Constant velocity joint according to Claim 7, **characterized in that** the angle of incidence of the bevels (17, 18) is 0 to 2 degrees.

9. Constant velocity joint according to Claim 7 or 8, **characterized in that** a transition rounding (19) is provided at the transition of the bevels (17, 18).

10. Constant velocity joint according to one of Claims 7 or 8, **characterized in that** a straight section (20) is provided at the transition of the bevels (17, 18), which straight section (20) adjoins the bevels via roundings (21, 22).

11. Constant velocity joint according to one of Claims 1 to 10, **characterized in that** at least one of the ball running faces (9, 10) on the windows (8) is formed, from an edge region (11) to the opposite edge region (13) in the peripheral direction, by two straight sections (23, 25) with a press fit and a central section (24) with a clearance fit.

12. Constant velocity joint according to one of Claims 1 to 11, **characterized in that** the opposite ball running faces (9, 10) on the windows (8) are symmetrical about the central longitudinal axis (C) of said windows (8).

13. Constant velocity joint according to one of Claims 1 to 12, **characterized in that** the ball running faces (9, 10) of the windows (8) are curved in the radial direction, with the radius of curvature being greater than the ball radius in such a way that, taking into consideration the operational radial and axial movement of the balls (6) in the windows (8), the balls (6) are held in the central region (12) of the windows (8) with a clearance fit or, in the event of a significant joint deflection or displacement, in contrast, in the edge regions (11, 13) with a press fit.

14. Constant velocity joint according to Claim 13, **characterized in that** the curvature of the ball running faces (9, 10) in the radial direction is a circular curvature.

15. Constant velocity joint according to one of Claims 1 to 12, **characterized in that** the ball running faces (9, 10) of the windows (8) are bevelled in the radial direction, with the windows (8) narrowing in the outward direction in such a way that, taking into consideration the operational radial and axial movement of the balls (6) in the windows (8), the balls (6) are held in the central region (12) of the windows (8) with a clearance fit or, in the event of a significant joint deflection or displacement, in contrast, in the edge regions (11, 13) with a press fit.

16. Constant velocity joint according to Claim 15, **characterized in that** the bevel angle of the ball running faces (9, 10) in the radial direction is in the range from 0 up to and including 7 degrees, preferably from 0.5 to 4 degrees and more preferably from 1 to 2 degrees.

## Revendications

1. Joint coulissant à billes à pistes de roulement obliques (4, 5), comprenant une cage (7) avec plusieurs fenêtres (8) allongées dans le sens périphérique, et plusieurs billes (6) reçues dans les fenêtres (8), les fenêtres (8) recevant les billes (6) avec un certain jeu au milieu des fenêtres (12), **caractérisé en ce que** lors d'une flexion ou d'un coulissement du joint (1) au-delà de la région de roulement principale, les fenêtres (8) maintiennent par contre les billes (6) serrées dans les régions des bords des fenêtres (11, 13).

2. Joint coulissant à billes selon la revendication 1, **caractérisé en ce que** les fenêtres (8) présentent, par rapport aux billes (6) un ajustement avec jeu au milieu des fenêtres (12), mais par contre un ajustement serré au niveau des régions des bords (11, 13).

3. Joint coulissant à billes selon la revendication 2, **caractérisé en ce que** l'ajustement avec jeu vaut au maximum +0,2 mm.

4. Joint coulissant à billes selon la revendication 2 ou 3, **caractérisé en ce que** l'ajustement serré vaut de - 0,01 à -0,05 mm.

5. Joint coulissant à billes selon l'une quelconque des revendications 2 à 4, **caractérisé en ce que** le passage de l'ajustement avec jeu à l'ajustement serré s'effectue en continu du milieu des fenêtres (12) aux régions des bords (11, 13).

6. Joint coulissant à billes selon l'une quelconque des revendications 1 à 5, **caractérisé en ce qu'**au moins l'une des surfaces de roulement (9, 10) est réalisée au niveau des fenêtres (8) depuis une région de bord (11) vers une région de bord (13) opposée dans le sens périphérique, avec une forme circulaire, de préférence avec un rayon de 75 à 300 mm, plus préférablement avec un rayon de 150 à 300 mm.

7. Joint coulissant à billes selon l'une quelconque des revendications 1 à 6, **caractérisé en ce qu'**au moins l'une des surfaces de roulement (9, 10) est réalisée au niveau des fenêtres (8) depuis une région de bord (11) vers une région de bord (13) opposée dans le sens périphérique par deux biseaux obliques (17, 18) qui convergent au milieu des fenêtres (12).

8. Joint coulissant à billes selon la revendication 7, **caractérisé en ce que** l'angle d'inclinaison des biseaux (17, 18) mesure 0 à 2 degrés.

9. Joint coulissant à billes selon la revendication 7 ou 8, **caractérisé en ce que** l'on prévoit dans le passage des biseaux (17, 18) un arrondi de passage (19).

10. Joint coulissant à billes selon l'une quelconque des revendications 7 ou 8, **caractérisé en ce que**, dans le passage des biseaux (17, 18) est prévue une portion droite (20) qui se raccorde aux biseaux par le biais d'arrondis (21, 22).

11. Joint coulissant à billes selon l'une quelconque des revendications 1 à 10, **caractérisé en ce qu'**au moins l'une des surfaces de roulement (9, 10) au niveau des fenêtres (8) depuis une région de bord (11) à la région de bord opposée (13) dans le sens périphérique est formée par deux portions droites (23, 25) avec un ajustement serré et une portion centrale (24) avec un ajustement avec jeu.

12. Joint coulissant à billes selon l'une quelconque des revendications 1 à 11, **caractérisé en ce que** les surfaces de roulement opposées (9, 10) au niveau des fenêtres (8) sont symétriques par rapport à leur axe médian longitudinal (C).

13. Joint coulissant à billes selon l'une quelconque des revendications 1 à 12, **caractérisé en ce que** les surfaces de roulement (9, 10) des fenêtres (8) sont courbées dans le sens radial, le rayon de courbure étant supérieur au rayon des billes, de telle sorte qu'en tenant compte du mouvement radial et axial des billes (6) dans les fenêtres (8) lors du fonctionnement, les billes (6) sont reçues dans la région centrale (12) des fenêtres (8) avec un ajustement avec jeu, mais au contraire avec un ajustement serré dans les régions des bords (11, 13) en cas de forte flexion ou de fort coulissement du joint.

14. Joint coulissant à billes selon la revendication 13, **caractérisé en ce que** la courbure des surfaces de roulement (9, 10) est une courbure circulaire dans le sens radial.

15. Joint coulissant à billes selon l'une quelconque des revendications 1 à 12, **caractérisé en ce que** les surfaces de roulement (9, 10) des fenêtres (8) sont obliques dans le sens radial, les fenêtres (8) se rétrécissant radialement vers l'extérieur de telle sorte qu'en tenant compte du mouvement radial et axial des billes (6) dans les fenêtres (8) lors du fonctionnement, les billes (6) sont reçues dans la région centrale (12) des fenêtres (8) avec un ajustement avec jeu, mais au contraire avec un ajustement serré dans les régions des bords (11, 13) en cas de forte flexion ou de fort coulissement du joint.

16. Joint coulissant à billes selon la revendication 15, **caractérisé en ce que** l'angle d'oblicité des surfaces de roulement (9, 10) dans la direction radiale est compris dans la plage de 0 à 7 degrés inclus, de préférence de 0,5 à 4 degrés et plus préférablement de 1 à 2 degrés.
